Europäisches Patentamt

European Patent Office

Office européen des brevets

(19)

(11)  EP 1 603 340 A2

## (12)  EUROPEAN PATENT APPLICATION

(43) Date of publication:
   07.12.2005  Bulletin 2005/49

(51) Int Cl.$^7$: **H04N 7/24**

(21) Application number: **05253326.2**

(22) Date of filing: **31.05.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **01.06.2004  JP 2004163042**

(71) Applicant: **SANYO ELECTRIC CO., LTD.**
   **Moriguchi-shi, Osaka (JP)**

(72) Inventors:
   • **Yabuta, Tetsutaka**
     **Daito City Osaka 574-0043 (JP)**
   • **Ieda, Kazuhiro**
     **Hirakata-City Osaka 573-1113 (JP)**

(74) Representative: **Beresford, Keith Denis Lewis**
   **Beresford & Co.,**
   **16 High Holborn**
   **London WC1V 6BX (GB)**

(54)  **Decoder without PCR corrected local clock**

(57)     Provided is a decoder capable of synchronously outputting audio and video without having a counter synchronised with a Program Clock Reference (PCR).

   The decoder takes out a Packetized Elementary Stream (PES) and the PCR from a Transport Stream (TS) and decides timing of outputting of an audio output part 6 and a video output part 7 referring to a Presentation Time Stamp (PTS) added to the PES. A local counter output part 8 performs a counting operation at a predetermined count-up frequency without receiving a correction control based on the PCR. A PCR-local counter list management part 9 creates a table formed of data of a counter value at the time of receiving the PCR, and the PCR. The audio output part 6 and the video output part 7 output first difference information on the basis of the counter value at the time of referring to the PTS of the PES and the counter value in the table, output second difference information on the basis of the PTS of the PES and the PCR in the table, and calculate a waiting time period until an access unit is reproduced and output on the basis of these pieces of difference information.

FIG. 1

**Description**

**BACKGROUND OF THE INVENTION**

Field of the Invention

The present invention relates to a decoder used for a digital broadcasting receiver, and the like.

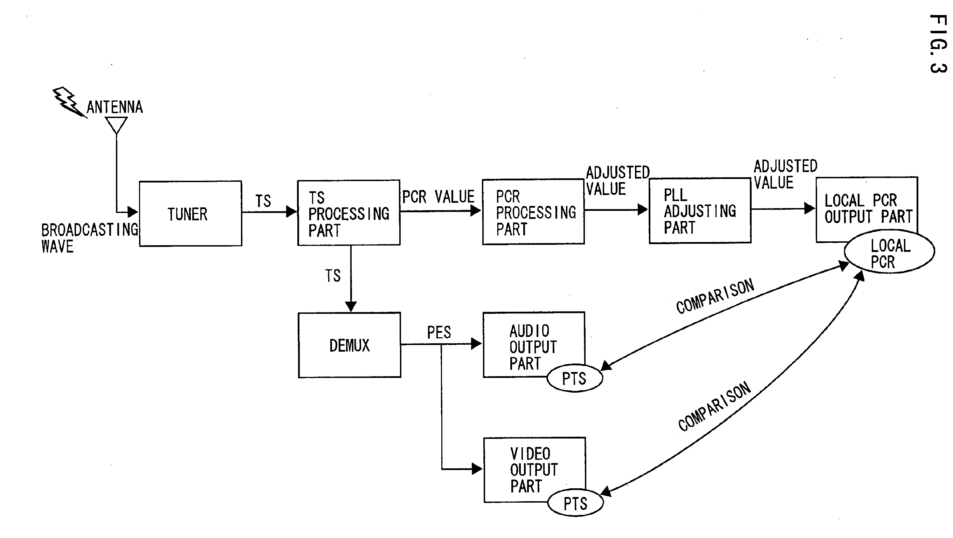

Figure 3 is a descriptive diagram showing a schematic configuration of a conventional digital broadcasting receiver. In digital broadcasting, when synchronously outputting audio and video (AV), it is necessary to time the outputting by comparing a PTS (Presentation Time Stamp) included in audio and video PES packets with a Local PCR (Local Program Clock Reference) value.

Below, a particular conventional method for this will be described referring to Figure 3. In a TS (Transport Stream) obtained by decoding a digital broadcasting wave, packets in which the PCR is written are included. A Local PCR counter which counts up at a frequency of the PCR (27MHz), as hardware or software, is provided on the receiver side. There is a deviation between a counter value of this Local PCR counter and a PCR value in a broadcasting wave, so that synchronism between these values is established by a PLL (phase locked loop) adjusting part in Figure 3 referring to the PCR value in the broadcasting wave.

In addition, TS packets of AV are included in the TS, and PES (Packetized Elementary Stream) packets of AV are created from the TS packets. In the PES packets, the PTS, i.e., information indicating time to reproduce and output an access unit (a unit of decoding, reproducing, and outputting) in the PES, is added. The PTS is the time information having the same unit with that of the PCR. When the result of comparing the PTS with the Local PCR shows that the Local PCR coincides with the time indicated by the PTS, the access unit is output. In a case of utilizing this method, it is necessary to have a Local PCR counter which is synchronized with the PCR of broadcasting wave as hardware or software (see Japanese Patent Application Laying-open No. 2003-348485).

**SUMMARY OF THE INVENTION**

However, it is conceivable that a digital broadcasting receiver, and others, can not have a Local PCR counter which is synchronized with a PCR of broadcasting wave due to a constraint of hardware or software.

In view of the above-described circumstance, an embodiment of the present invention seeks to provide a decoder capable of synchronously outputting audio and video without having a counter synchronized with a Program Clock Reference.

In an embodiment of the present invention, a decoder takes out a packetized elementary stream and a program clock reference from a transport stream and decides timing of decoding, reproducing, and outputting the packetized elementary stream referring to a presentation time stamp added to the packetized elementary stream in performing decoding and reproducing process of the packetized elementary stream, and comprises a counter value output means for performing a counting operation at a predetermined count-up frequency without receiving a correction control based on the program clock reference, a means for creating a table formed of a pair of data of a counter value at the time of receiving the program clock reference and the program clock reference, a means for outputting first difference information on the basis of a counter value at the time of referring to the presentation time stamp of the packetized elementary stream and the counter value on the table, a means for outputting second difference information on the basis of the presentation time stamp of the packetized elementary stream and the program clock reference on the table, and a means for calculating a waiting time period until the packetized elementary stream is reproduced and output on the basis of the first difference information and the second difference information (Hereinafter referred to as a first configuration in this section).

With the above-mentioned configuration, the waiting time period until the packetized elementary stream is reproduced and output is calculated on the basis of the first difference information and the second difference information, so that it is possible to synchronously output audio and video without having the counter synchronized with the program clock reference.

In a first configuration, the decoder may be configured to calculate a plurality of waiting time periods for output on the basis of all the data in contents of the table and adopt the smallest waiting time period for output out of the plurality of waiting time periods for output. Or, in the first configuration, the decoder may be configured to select data in which a presentation time stamp value is larger than the program clock reference value and a value obtained by subtracting a presentation time stamp value from a program clock reference value is the lowest out of the contents of the table, and to calculate one waiting time period for output on the basis of the selected data.

In a decoder of such configuration, it may be configured to hold a first threshold value, and immediately reproduce and output the packetized elementary stream when the calculated waiting time period for output is equal to or smaller than the first threshold value, even if the calculated waiting time period for output is not zero. Furthermore, in this configuration, it may be configured to determine that the calculated waiting time period for output is valid when the condition in which the calculated waiting time period for output is larger than the first threshold value and equal to or smaller than a second threshold value is met, and to abandon the packetized elementary stream, regarding the calculated waiting time period for output as invalid, when the above-described condition is not met. In addition, in this configuration, it may be configured to abandon the packetized elementary stream, regarding the calculated waiting time period for output as invalid, under a predetermined condition, even if a condition in which the calculated waiting time period for output is larger than the first threshold value and equal to or smaller than the second threshold value is met.

In embodiments of the present invention, it is possible to synchronously output audio and video without having a counter synchronized with the program clock reference.

Embodiments of the present invention will be described by way of example only in conjunction with the accompanying drawings.

## BRIEF DESCRIPTION OF THE DRAWINGS

Figure 1 is a block diagram showing a digital broadcasting receiver (decoder) of an embodiment of the present invention;
Figure 2 A is a descriptive diagram showing a concept of calculating a waiting time period;
Figure 2 B is a descriptive diagram showing how a processing packet is handled; and
Figure 3 is a block diagram showing a conventional digital broadcasting receiver (decoder).

## DESCRIPTION OF THE PREFERRED EMBODIMENTS

(A first embodiment)

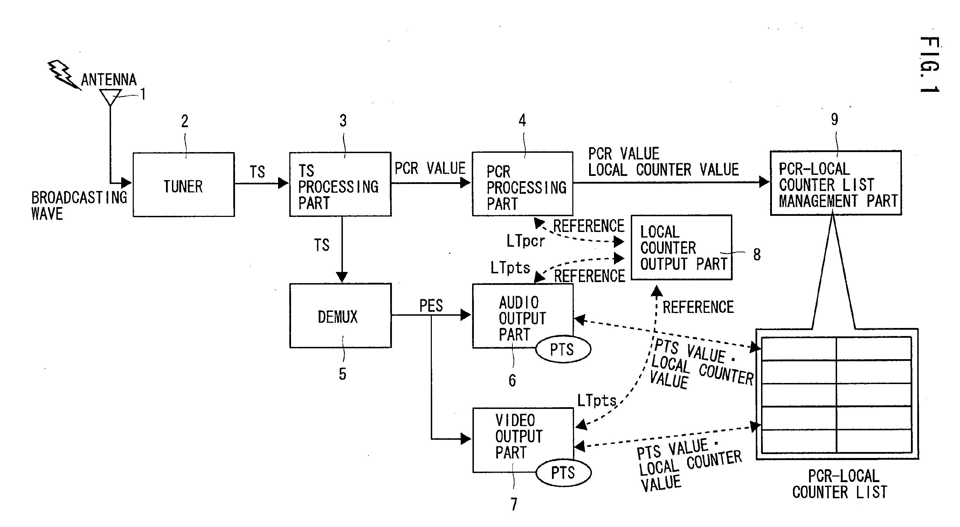

Below, a digital broadcasting receiver (decoder) of an embodiment of the present invention will be described based on Figure 1.

An antenna 1 receives digital broadcasting transmitted from a satellite or a terrestrial broadcast station. A digital tuner 2 takes out a signal of a particular frequency out of high-frequency digital modulation signals including video data and audio data. In addition, the digital tuner 2 demodulates the selected digital modulation signal and outputs a transport stream (TS), and moreover, detects an error of digital data and corrects the error.

A TS processing part 3 extracts a PCR value from an output transport stream and feeds the extracted value to a PCR processing part 4, and feeds the transport stream to a demultiplexer (DEMUX) 5. The demultiplexer 5 separates the transport stream into a video stream, an audio stream, and the like.

The audio stream (audio PES) separated by the demultiplexer 5 is fed to an audio output part 6 and the video stream (video PES) is fed to a video output part 7. The video output part 7 decodes an input coded signal so as to find a quantization coefficient and a motion vector, and carries out an inverse DCT (Discrete Cosine Transformation) and a motion compensation control based on the motion vector, and the like, to output the video data. In addition, the audio output part 6 decodes the input coded signal and generates the audio data. Then, in performing these processes, timing of decoding, reproducing, and outputting an access unit is weighed on the basis of a PTS of the access unit.

A local counter output part 8 is a circuit for outputting a local counter value obtained by counting up at an arbitrary frequency. The local counter output part 8 does not perform correction process based on a received PCR (not synchronize with PCR).

The PCR processing part 4 receives the local counter value at the time of receiving a PCR value from the local counter output part 8, and data composed of the PCR value and the local counter value is fed to a PCR-local counter list management part 9.

The PCR-local counter list management part 9 registers the data composed of the PCR value and the local counter value on a PCR-local counter list.

An outline of a method of synchronously outputting AV (audio / video) of the present invention will be described as follows. In a case of reproducing access units of the AV, the PTSs added in the access units are referred to, and the local counter values are also referred to at the same time, and a pair of data composed of the PTS value and the local counter value is successively produced. Then, on the basis of these pairs of data, the counter values at the time of referring to the PTSs of respective access units, and the PTSs of respective access units, various waiting time periods until respective access units are decoded, reproduced, and output are calculated. The smallest waiting time period out of the various calculated waiting time periods is adopted. After an elapse of the adopted waiting time period, the result of decoding and reproducing is output.

Next, a particular process content will be described.

1. Creating a PCR value-local counter value list

When the receiver receives the PCR, the receiver refers to the instantaneous local counter value at the time of receiving, and creates a pair of data of the PCR and local counter value. Then, the receiver adds this pair of data to the bottom of the PCR value-local counter value list. The receiver performs a similar task at each time that the receiver receives the PCR.

2. A method of calculating the waiting time period until the access unit is decoded, reproduced, and output

The video output part 7 and the audio output part 6 obtain the local counter value at the time of referring to the PTS of the access unit (the local counter value at this time is LTpts), and produce data of the PTS of the access unit and LTpts. By using this data and a pair of data which is each item on the PCR value-local counter value list, the waiting time period until the access unit is reproduced and output is calculated according to a method described below.

The PCR is composed of a Base which counts up at 90KHz and an Extension (Ext) which counts up at 27MHz. When the value of the Ext reaches 300, the Base counts up by 1, and the value of Ext returns to zero (0). It is noted that the Base is a counter of 33 bits and the Ext is a counter of 9 bits. Similarly, the PTS counts up at 90KHz. Accordingly, the Base of the PCR and the PTS are compared.

On the list, the PCR value is $PCR\_n$, the local counter value is $LTpcr\_n$, the PTS value of access unit is PTS, the local counter value at the time of referring to the PTS of the access unit is LTpts, and the count-up frequency of the local counter is Flt. It is noted that n= 1, 2, 3, ... , p - 1, p (p is an integer).

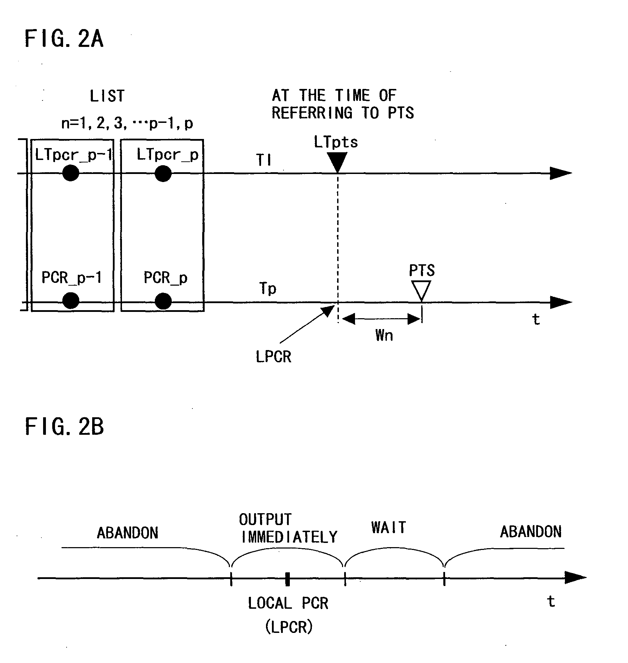

Here, in Figure 2 A, a relationship among the PCR value-local counter value list, the local counter value (LTpts) at the time of referring to the PTS of the access unit, a difference TI, the PTS of the access unit, a difference Tp, the waiting time period Wn, and the local PCR value (LPCR) is shown as a frame format with the time period being on a horizontal axis.

At first, the difference Tp per millisecond between the PCR value and the PTS value is evaluated.

$$TP = |PTS - PCR\_n| / 90$$

Next, the difference TI per millisecond between the local counter value LTpts at the time of referring to the PTS, and the $LTPcr\_n$ at the time of receiving the PCR is evaluated.

$$TI = |\,LTpts - Ltpcr\_n\,| \cdot 1000 / Flt$$

If the waiting time period until the access unit is reproduced and output is Wn, then

$$Wn = |Tp - TI|$$

Thus, it is possible to calculate the waiting time period until the access unit is reproduced and output.

3. A method of deciding how to handle the access unit

The video output part 7 and the audio output part 6, at the time of referring to the PTS of the access unit, calculate the waiting time period Wn until the access unit is reproduced and output with regard to all items on the PCR value-local counter value list. The smallest time period out of a plurality of calculated time periods is adopted as the waiting time period until the access unit is reproduced and output.

Ideally, if the TS is processed in order of being received, PTS $\geq$ (larger than or equal to) PCR, and moreover, both values are very close to each other. However, there are some cases that the above-described condition is not established due to a processing timing of software and a defect of a transmitting system, etc.

Accordingly, the method of how to handle the PES is decided by applying the following algorithm to the calculated waiting time periods. In Figure 2B, with taking the local PCR value ($LPCR\_n$) as a reference, a range of time period during which the access unit is reproduced and output immediately, a range of time period during which reproducing and outputting of the access unit is waited until the waiting time period Wn passes, and a range of time period during which the access unit is abandoned, are shown as a frame format.

Two threshold values are set. One is a threshold value Pp for determining to immediately reproduce and output the access unit, and the other is a threshold value Pw for determining whether or not the waiting time period until the access unit is reproduced and output is valid. It is noted that Pp is much smaller than pw (Pp<<Pw).

If Wn $\leq$ (smaller than or equal to) Pp, even in a case that Wn $\neq$ (not equal to) 0 (zero), it is determined that the access unit is to be reproduced and output immediately.

When Wn > (larger than) Pp , and Wn $\leq$ (smaller than or equal to) Pw, how to handle the access unit is decided using the following method.

(1) The local PCR value ($LPCR\_n$) is calculated using an equation below.

$$LPCR\_n = PCRn + 90 \cdot TI$$

(2) Compare $LPCR\_n$ with the PTS.

(A) In a case that PTS $\geq$ (larger than or equal to) $LPCR\_n$

In a case that the PTS and $LPCR\_n$ are not greatly far from each other, it is determined that the waiting time period until the access unit is reproduced and output is valid. In a case that the PTS $LPCR\_n$ are greatly far from each other, it is determined that the access unit is to be abandoned.

(B) In a case that PTS < (smaller than) $LPCR\_n$

In this case, it is normally determined that the access unit is to be abandoned. However, the PTS and the PCR are counters of 33 bits, therefore, there is a possibility of overflow. Accordingly, when the PTS and the $LPCR\_n$ are greatly far from each other, the PTS is regarded as to be in a state of overflow, and it is determined that the access unit is in a reproduction and output waiting state. When the PTS and the LPCR_n are not greatly far from each other, it is determined that the access unit is to be abandoned.

When Wn > (larger than) Pw, it is determined that the access unit is to be abandoned.

(A second embodiment)

In the above-described first embodiment, at the time of referring to the PTS of access unit, the waiting time period Wn until the access unit is reproduced and output is calculated with regard to all items on the PCR value-local counter value list. Then, the smallest time period out of a plurality of calculated time periods is adopted as the waiting time period until the access unit is reproduced and output.

Below, an another example of a method for calculating the waiting time period until the access unit is reproduced and output will be shown.

The method of creating a PCR value-local counter value list and the method of deciding how to handle the access unit is the same as that in the first embodiment. Although the method of calculating the waiting time until the access unit is reproduced and output is similar to that in the first embodiment, there is a difference in how the items on the list which are used for calculating the waiting time period are selected.

At first, all the PCR values and the PTS values on the list are compared. The PCR value on the list is PCR_n, the local counter value is LTpcr_n, the PTS value of the access unit is PTS, the local counter value at the time of referring to the PTS of the access unit is LTpts, and a count-up frequency of the local counter is Flt.

Assuming that PCR_n < (smaller than) PTS and A= PCR_n - PTS, and then, the item of which value A is the smallest is selected from the list. After that, the waiting time period until the access unit is reproduced and output is calculated with regard to the selected item on the list.

Similar to the above-described first embodiment, at first, the difference Tp per millisecond between the PCR value and the PTS value is calculated.

$$Tp=|PTS-PCR\_n|/90$$

Next, the difference Tl per millisecond between LTpts, i.e., the local counter value at the time of referring to the PTS and LTPcr_n at the time of receiving the PCR is calculated.

$$Tl = |LTpts - LTpcr\_n| \cdot 1000 / Flt$$

If the waiting time period until the access unit is reproduced and output is Wn, then

$$Wn = |Tp - Tl|$$

Thus, the waiting time period until the access unit is reproduced and output is calculated.

In the first embodiment, the waiting time periods are calculated with regard to all the items on the list and the smallest time is searched for out of the calculated waiting time periods. On the other hand, in the second embodiment, the waiting time period is calculated with regard to only one item on the list, so that it is possible to greatly reduce the calculating time.

Particularly, in the first embodiment, such calculation as described below is carried out,

$$W1 = |Tp\_1 - Tl\_1|$$

$$W2=|Tp\_2-Tl\_2|$$

$$W3 =|Tp\_3 - Tl\_3|$$

.

.

$$Wp=|Tp\_p-Tl\_p|$$

and the smallest value out of the values obtained by the calculation is to be Wn.

In the second embodiment, such calculation as described below is carried out,

$$A1 = PCR\_1 - PTS$$

$$A2 = PCR\_2 - PTS$$

$$A3 = PCR\_3 - PTS$$

.

.

$$Ap = PCR\_p - PTS$$

and if the smallest value out of the values obtained by the calculation is A3, the following arithmetical operation is carried out,

$$Tp = |PTS - PCR\_3|/90$$

$$Tl = |LTpts - LTpcr\_3| \cdot 1000 / Flt$$

and evaluate Wn = |Tp - Tl|.

Although the present embodiments have been described and illustrated in detail, it is clearly understood that the same is by way of illustration and example only and is not to be taken by way of limitation.

## Claims

**1.** A decoder that takes out a packetized elementary stream and a program clock reference from a transport stream and decides timing of decoding, reproducing, and outputting said packetized elementary stream referring to a presentation time stamp added to the packetized elementary stream in performing decoding and reproducing process of said packetized elementary stream, comprising:

a counter value output means for performing a counting operation at a predetermined count-up frequency without receiving a correction control based on said program clock reference;
a means for creating a table formed of a pair of data of a counter value at the time of receiving said program clock reference and said program clock reference;
a means for outputting first difference information on the basis of a counter value at the time of referring to the presentation time stamp of the packetized elementary stream and said counter value on said table;
a means for outputting second difference information on the basis of the presentation time stamp of the packetized elementary stream and said program clock reference on said table; and
a means for calculating a waiting time period until the packetized elementary stream is reproduced and output on the basis of the first difference information and the second difference information.

**2.** A decoder according to claim 1, configured to calculate a plurality of waiting time periods for output on the basis of all the data in contents of said table and adopt the smallest waiting time period for output out of said plurality of waiting time periods for output.

**3.** A decoder according to claim 1, configured to select data in which a program clock reference value is larger than a presentation time stamp value and a value obtained by subtracting a presentation time stamp value from a program clock reference value is the lowest, and calculate one waiting time period on the basis of the selected data.

**4.** A decoder according to any one of claims 1 to 3, configured to hold a first threshold value, and immediately reproduce and output a packetized elementary stream, when the calculated waiting time period for output is equal to or smaller than the first threshold value, even if the calculated waiting time period for output is not zero.

**5.** A decoder according to claim 4, configured to determine that the calculated waiting time period for output is valid when a condition in which the calculated waiting time period for output is larger than the first threshold value and equal to or smaller than a second threshold value is met, and to abandon a packetized elementary stream, regarding the calculated waiting time period for output as invalid, when said condition is not met.

**6.** A decoder according to claim 5, configured to abandon the packetized elementary stream, regarding the calculated waiting time period for output as invalid, under a predetermined condition, even if a condition in which the calculated waiting time period for output is larger than the first threshold value and equal to or smaller than the second threshold value is met.

# FIG. 1

ANTENNA 1

BROADCASTING WAVE

TUNER 2

TS

TS PROCESSING PART 3

TS

PCR VALUE

DEMUX 5

PES

PCR PROCESSING PART 4

LTpcr — REFERENCE
LTpts — REFERENCE

PCR VALUE
LOCAL COUNTER VALUE

PCR-LOCAL COUNTER LIST MANAGEMENT PART 9

LOCAL COUNTER OUTPUT PART 8

REFERENCE

AUDIO OUTPUT PART 6 — PTS

VIDEO OUTPUT PART 7 — PTS

LTpts

PTS VALUE · LOCAL COUNTER VALUE

PTS VALUE · LOCAL COUNTER VALUE

PCR-LOCAL COUNTER LIST

# FIG. 2A

LIST

n=1, 2, 3, ···p−1, p

AT THE TIME OF
REFERRING TO PTS

| LTpcr_p−1 | LTpcr_p |
|---|---|

TI

LTpts

PCR_p−1 | PCR_p

Tp

PTS

Wn

LPCR

t

# FIG. 2B

| ABANDON | OUTPUT IMMEDIATELY | WAIT | ABANDON |

LOCAL PCR
(LPCR)

t

FIG. 3